(19) Europäisches Patentamt
European Patent Office
Office européen des brevets

(11) **EP 1 947 430 A1**

(12) **EUROPEAN PATENT APPLICATION**
published in accordance with Art. 158(3) EPC

(43) Date of publication:
**23.07.2008 Bulletin 2008/30**

(51) Int Cl.:
**G01H 9/00** *(2006.01)*

(21) Application number: **06822345.2**

(22) Date of filing: **26.10.2006**

(86) International application number:
**PCT/JP2006/321369**

(87) International publication number:
**WO 2007/049693 (03.05.2007 Gazette 2007/18)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.10.2005 JP 2005313084**

(71) Applicant: **THE TOKYO ELECTRIC POWER COMPANY INCORPORATED**
**Tokyo 100-8560 (JP)**

(72) Inventors:
• **MORI, Michitsugu**
**Chiyoda-ku, Tokyo 1008560 (JP)**
• **TEZUKA, Hideaki**
**Chiyoda-ku, Tokyo 1008560 (JP)**

(74) Representative: **Siegert, Georg et al**
**Hoffmann - Eitle**
**Patent- und Rechtsanwälte**
**Arabellastrasse 4**
**81925 München (DE)**

(54) **VIBRATION MEASURING SYSTEM, VIBRATION MEASURING METHOD, AND COMPUTER PROGRAM**

(57)    There is provided a non-contact vibration measurement technique for a structure by continuously imaging the structure from a far distance using a PIV system and measuring vibration through image analysis. A vibration measurement method includes an imaging step for imaging an object separated by a long distance at a minute time interval by including a long focus optical system, an image processing step for comparing luminance pattern distributions at plural time instants obtained by the imaging step so as to measure a moving direction and a moving amount of a predetermined particle image in the object, a measuring result input step for inputting numerous measurement results of the moving direction and the moving amount of the predetermined particle image measured by the image processing step, a vibration frequency calculation step for calculating an acceleration vector from the imaging interval and performing Fourier transform thereon so as to calculate the vibration frequency of the object, and a vibration frequency output step for outputting the calculation result obtained by the vibration frequency calculation step.

FIG. 2

EP 1 947 430 A1

**Description**

Technical Field

The present invention relates to a technique capable of performing measurement of vibration related to a structure or the like, which is difficult to be approached, in a non-contact manner without approaching an object to be measured.

Background Art

As a system for observing, for example, smoke discharged from a chimney of a power station or the like from a far location, techniques disclosed in Patent Document 1 and Patent Document 2 are known. They use plural ITV cameras and/or color cameras to detect presence of smoke discharged from the chimney using parallax and color difference between the cameras.

Patent Document 1: Japanese Patent Publication No. S63-88428

Patent Document 2: Japanese Patent Publication No. H10-232198

On the other hand, in recent years, there is known particle image velocimetry (hereinafter referred to as "PIV system") which measures flow of a complicated flow field with high accuracy and precision. A laser light is incident in a sheet form on a flow field of a fluid to be measured so as to form a laser sheet, particle images on the laser sheet at two time instants are imaged, and luminance pattern distributions thereof are compared to measure the flow velocity and the direction of the fluid.

Disclosure of the Invention

Problems to be Solved by the Invention

Incidentally, there may be a case where, for an already existing building or structure, it is difficult to measure an external force received from the surrounding environment thereof.

Specifically, there may be a case where, in a structure to which a measurer cannot easily approach (for example, the vicinity of an upper portion of a transmission line tower), it is desired to measure the vibration frequency thereof when the structure is blown by the wind and vibrating. Transmission line towers in a power station are required to have robustness so as not to fall down even under strong wind, but there is a possibility of damage or the like by vibration when natural periods match due to a problem of fluid-excited vibration.

Also on the transmission lines, there have been problems of cutoff accident and the like due to galloping phenomenon by freezing of ice thereon. Tests are conducted with imitation lines or the like, but it has been very difficult to cover all of extensive installation conditions.

Next, a phenomenon such that an external force received from the surrounding environment becomes a problem in a power station will be introduced.

For example, there is vibration of piping such as surging by a pump or air-exhaust ventilator. In a location needed for measuring such vibration, a piping is not always located at a position where an acceleration sensor can be attached easily, and also points to be measured thereon may often be numerous. Accordingly, there has been demanded a simple acceleration measurement (vibration measurement) technique that does not require any engineering work/operation at the site such as building scaffolding.

The present invention is made in view of the above-described problems, and an object thereof is to provide a non-contact vibration measurement technique for a structure by continuously imaging the structure from a far distance using a PIV system and measuring vibration through image analysis.

Means for Solving the Problems

(Claim 1)

The invention of claim 1 relates to a vibration measurement system provided with an imaging means for imaging an object at a minute time interval, a control means for controlling the imaging means, and an image processing means for comparing luminance pattern distributions at plural time instants obtained by the imaging means so as to measure a moving direction and a moving amount of a predetermined particle image in the object, the imaging means being provided with a long focus optical system, and thereby the vibration measurement system being capable of imaging an object separated by a long distance.

The vibration measurement system includes a vibration frequency calculation means for inputting numerous measurement results of the moving direction and the moving amount of the predetermined particle image measured by the image processing means and calculating an acceleration vector from the imaging interval and perform Fourier transform thereon so as to calculate the vibration frequency of the object.

(Explanation of Terms)

The "object" is a structure, building, or the like for which it is desired to perform vibration measurement, and is located far from the "imaging means."
As the "imaging means," a camera having a CCD image sensor (CCD camera) is used, but a camera having a CMOS image sensor can be used instead.
The "long distance" means a distance longer than a laboratory-level, and specifically is a distance of five meters or longer for telescopic use application, and 500 mm or longer for a microscopic use application.
The "particle image" has meanings including not only an image of "a particle" in the sense that it can be recognized as a single particle as the object, but also "a gradation image" that can be recognized by a pattern of gradation or the like in an image region when assuming the image region as a cut-out part of an image.

(Effects)

The imaging means images an object at a minute time interval while being controlled by the control means. With the image photographed, the image processing means compares luminance pattern distributions at plural time instants so as to calculate a moving direction and a moving amount of a predetermined particle image in the object.
Next, numerous measurement results of the moving direction and the moving amount of the predetermined particle image measured by the image processing means are inputted to the vibration frequency calculating means. Then the vibration frequency calculating means calculates an acceleration vector from the imaging interval and performs Fourier transform thereon so as to calculate the vibration frequency of the object.
Here, the vibration frequency of the object at a long distance can be measured. As long as a natural vibration frequency in the object can be calculated, determination of the degree of hazard is also possible in relation to the measured vibration frequency.

(Claim 2)

The invention of claim 2 is to limit the vibration measurement system according to claim 1.
Specifically, the control means has a focal distance adjusting means for calculating a focal distance such that, for photographed images at two time instants obtained by the image processing means, a moving distance of a particle image within the photographed images falls within a predetermined range of set number of moving pixels.
Then a long focus optical system corresponding to a focal distance obtained by the focal distance adjusting means is selected, and the long focus optical system is attached to the imaging means for performing imaging.

(Claim 3)

The invention of claim 3 is to limit the vibration measurement system according to claim 2.
Specifically, the focal distance adjusting means is configured to calculate a focal distance f that satisfies the following relational expressions (1), (2):

$$\text{set number of moving pixels} = V \times \Delta t / D \ \dots \ (1),$$

$$D = f/L \times const \ \dots\dots \ (2)$$

(where "V" is the temporary velocity of the object, "$\Delta t$" is the imaging time interval between two time instants, "D" is the size of an image projected on each pixel of the imaging means, "f" is the focal distance, "L" is the distance to the object, "const" is a constant obtained from experiments.)

(Claim 4)

The invention of claim 4 relates to a vibration measurement method including an imaging step for imaging an object separated by a long distance at a minute time interval by including a long focus optical system, an image processing step for comparing luminance pattern distributions at plural time instants obtained by the imaging step so as to measure a moving direction and a moving amount of a predetermined particle image in the object, a measuring result input step for inputting numerous measurement results of the moving direction and the moving amount of the predetermined particle image measured by the image processing step, a vibration frequency calculation step for calculating an acceleration vector from the imaging interval and performing Fourier transform thereon so as to calculate the vibration frequency of the object, and a vibration frequency output step for outputting the calculation result obtained by the vibration frequency calculation step.

(Claim 5)

The invention of claim 5 relates to a vibration frequency measurement program for a vibration measurement system of long focus type provided with an imaging means for imaging an object at a minute time interval, a control means for controlling the imaging means, and an image processing means for comparing luminance pattern distributions at plural time instants obtained by the imaging means so as to measure a moving direction and a moving amount of a predetermined particle image in the object, the imaging means being provided with a long focus optical system, and thereby the vibration measurement system being capable of imaging an object separated by a long distance.
The program is a computer program configured to cause a computer controlling the vibration measurement system to realize a measuring result input step for inputting numerous measurement results of the moving direction and the moving amount of the predetermined particle image measured by the image processing step, a vibration frequency calculation step for calculating an acceleration vector from the imaging interval and performing Fourier transform thereon so as to calculate the vibration frequency of the object, and a vibration frequency output step for outputting the calculation result obtained by the vibration frequency calculation step.

Effects of the Invention

According to the present invention, it is possible to provide a non-contact vibration measurement technique for a structure by continuously imaging the structure from a far distance using a PIV system and measuring vibration through image analysis.
Further, the system can be utilized as a technique capable of measuring vibration for an object that cannot be contacted.

Brief Description of Drawings

FIG. 1 is a conceptual diagram of a PIV system capable of imaging by a long focus;
FIG. 2 a hardware configuration diagram of the PIV system capable of imaging by a long focus;
FIG. 3 is a photographed image of an imitation tracer with 1 mm diameter that is 15 meters away;
FIG. 4 is a photographed image of a VSJ-PIV standard image, attached on a piping surface to be an object, taken from a position that is 15 meters away;

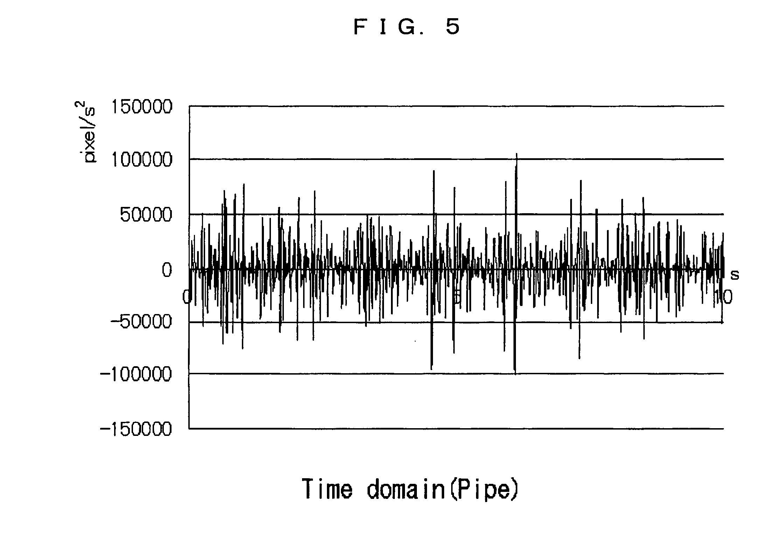

FIG. 5 is a graph showing a value such that, when photographing the piping surface at each minute interval, the number of moving pixels is divided by a square of time so as to check acceleration thereof;
FIG. 6 shows that a power spectrum is obtained using FFT when the piping is the object;
FIG. 7 shows a transmission line tower at a far distance being the object and an imaging region thereof;

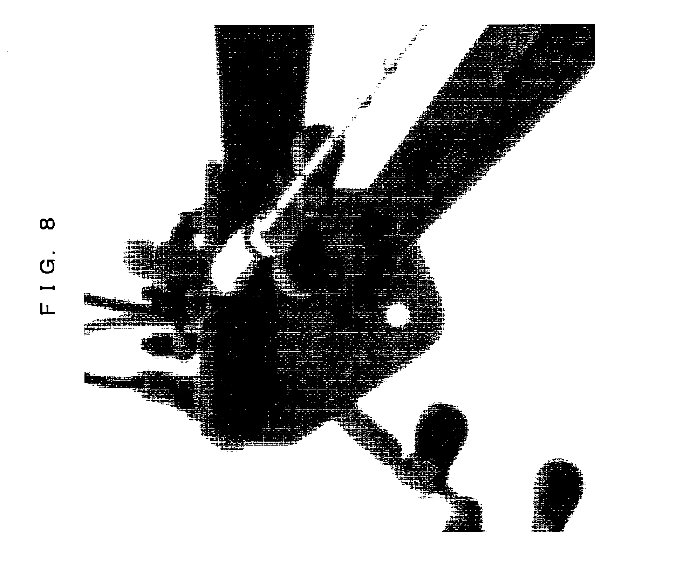

FIG. 8 is a photographed image in the imaging region in FIG. 7;

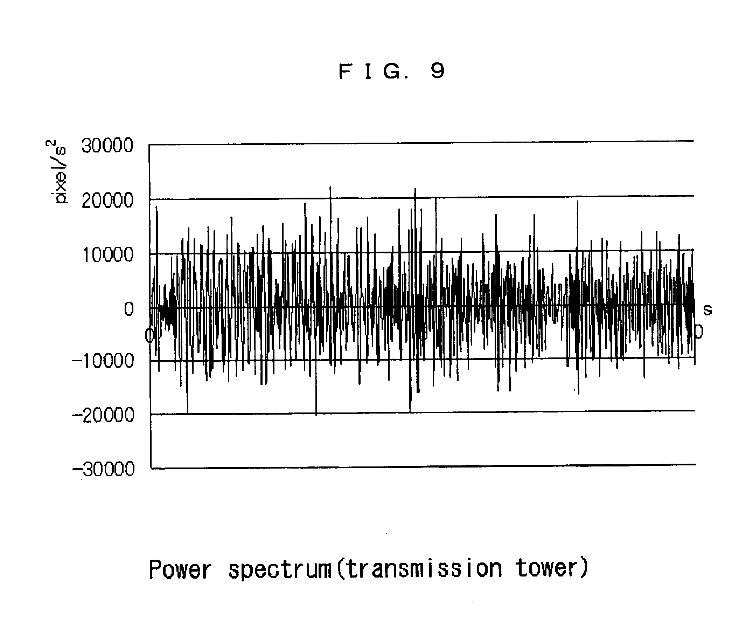

FIG. 9 is a graph showing a value such that, when photographing the transmission line tower at a minute interval, the number of moving pixels is divided by a square of time so as to check acceleration thereof;
FIG. 10 shows that a power spectrum is obtained using FFT when the transmission line tower is the object;

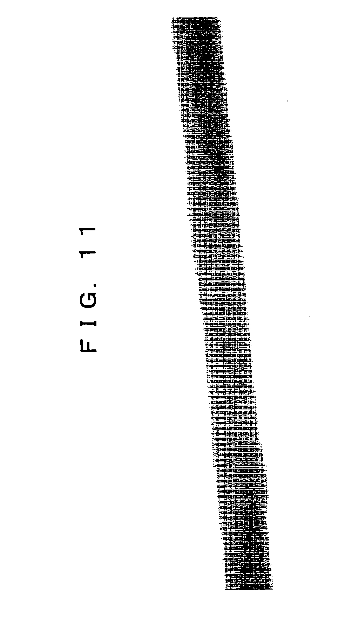

FIG. 11 is a photographed image in the case that a transmission line is the object;

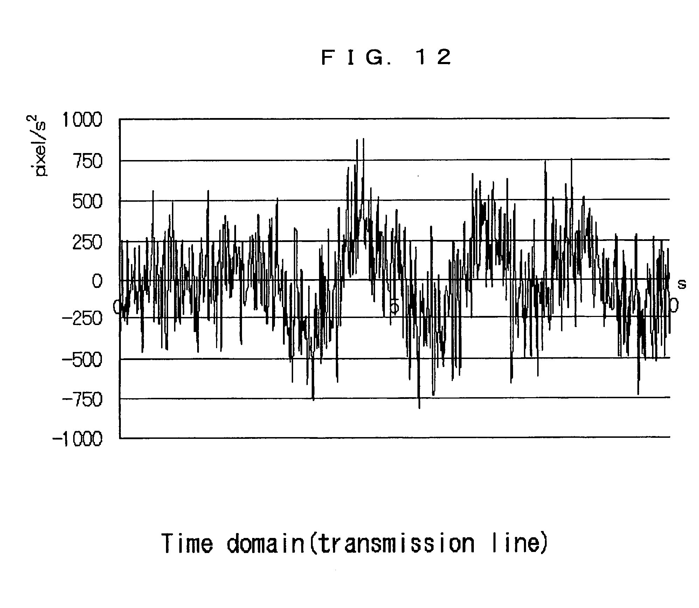

FIG. 12 is a graph showing a value such that, when photographing the transmission line at a minute interval, the number of moving pixels is divided by a square of time so as to check acceleration thereof; and
FIG. 13 shows that a power spectrum is obtained using FFT when the transmission line is the object.

Explanation of Codes

| 2 | CCD camera |
|---|---|
| 3 | long focus optical system |
| 4 | computer |
| 41 | control means |
| 41a | focal distance adjusting means |
| 41 b | timing control means |
| 42 | image capture means |
| 43 | image processing means |
| 5 | laser light projecting means |

Best Mode for Carrying out the Invention

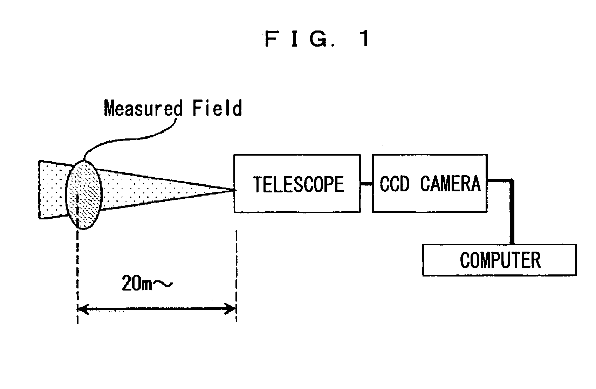

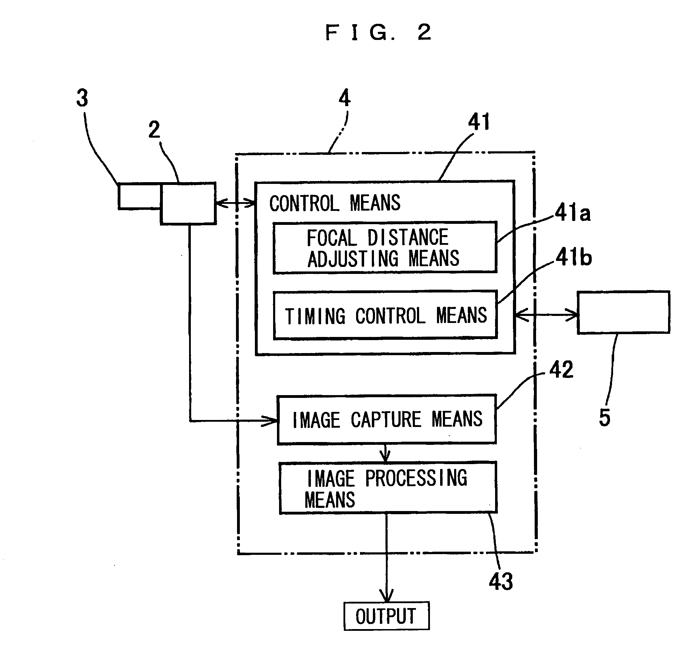

Hereinafter, an embodiment of the present invention will be explained in further detail based on the drawings. FIG. 1 conceptually shows a vibration measurement system 1 according to an embodiment of the present invention, and FIG. 2 shows the system as a block diagram. The system is structured having a CCD camera 2 including a long focus optical system 3 as an imaging means, a computer 4, and so on.

To the CCD camera 2, the long focus optical system 3 is attached, but it is preferable to use a lens of single focus type (hereinafter simply referred to as "single lens") as the long focus optical system 3. In this case, a more preferable structure is such that a turret is provided and single lenses of plural types can be selected. Use of the turret also enables automatic selection of a single lens. When a Cassegrain optical system is adopted, it becomes possible to make an optical system having a long focal distance compact. Adoption of a Maksutov-Cassegrain, Schmitt-Cassegrain, or the like, which adds one lens on the entire surface, is preferable because aberration can be improved.

A lens having a zoom function has a drawback in that it generally has a large field curvature, but such a lens can be used as long as it is capable of obtaining a stable image with glass having high refractive index.

Note that although a camera including a CCD image sensor (CCD camera) is used as the imaging means in this embodiment, a camera including CMOS image sensor can be used instead.

As shown in FIG. 1 and FIG. 2, the computer 4 is connected to the CCD camera 2, and is structured including a control means 41 controlling driving of the CCD camera 2, an image capture means 42 receiving an image signal photographed by the CCD camera 2 and performing predetermined processing thereon and an image processing means 43. The control means 41 is structured including a focal distance adjusting means 41 a performing calculation of an appropriate focal distance f for the CCD camera 2, or the like.

Specifically, the focal distance adjusting means 41 a calculates a focal distance f that satisfies the following relational expressions (1), (2):

$$\text{set number of moving pixels} = V \times \Delta t \ / \ D \ ... \ (1),$$

$$D = f/L \times const \ ...... \ (2)$$

(where "V" is the temporary velocity of an object, "$\Delta t$" is the imaging time interval between two time instants, "D" is the size of an image projected on each pixel of the imaging means, "f" is the focal distance, "L" is the distance to the object, "const" is a constant obtained from experiments.)

The image capture means 42 is structured including a frame grabber board that digitizes an analog image signal from the CCD camera 2. The image processing means 43 processes and analyzes by PIV method an image frame as a digital image signal outputted from the frame grabber board. Note that a circuit correcting distortion aberration of image or the like may be provided in a front stage of the image processing means 43.

In the case where the focal distance adjusting means 41a is provided, for photographed images at two time instants obtained by the image processing means 43, an appropriate focal distance f is calculated so that moving distances of particle images within the photographed images fall within the above-described range.

In the image processing means 43, particle images at two time instants imaged by the CCD camera 2 with a minute time interval are assumed as distributions of luminance patterns, and the two particle images are compared and analyzed so as to estimate respective moving amounts. Specifically, with the value at a certain point in a particle image being taken as a luminance value, and with a particle image in which the luminance value is distributed to a predetermined region being taken as a luminance pattern, a similarity in such luminance patterns is obtained by cross-correlation method or luminance difference accumulation method, and the moving amount and the moving direction of the particle image between two images are obtained. Then, with the movement amount, movement direction on pixels of the particle image and a minute time interval $\Delta t$, the actual flow velocity and the flow direction of the fluid to be measured are obtained to analyze the flow field.

As illumination, continuous light by halogen light source, natural light, or the like may be used. As necessary for imaging, a laser light projecting means 5 is used to project a laser light.

Here, upon processing and analyzing by the image processing means 43 to obtain the moving amount of a particle image or the like, when particle images constituting predetermined luminance patterns in particle images at two time instants are separated too far, it is difficult to find a correlation therebetween. Therefore, it is preferable that the moving distance of a particle image falls within a region of about 0.5% to 10% with respect to the total number of vertical or horizontal pixels (for example, 5 to 100 pixels in the case that the total number of vertical (or horizontal) pixels is 1000).

On the other hand, an object of this embodiment is to analyze the flow field of a fluid to be measured at a far location, which is separated by a long distance from the CCD camera 2 as the imaging means, and the long focus optical system 3 is attached to the CCD camera 2. However, whether the moving amount of a particle image fall within the above-described range depends on the focal distance f of the long focus optical system 3 as well as on the imaging time interval $\Delta t$ between two time instants and the distance L to the fluid to be measured.

Note that when the distance L to the object is short, the relationship between the size D of an image projected on each pixel and the focal distance f becomes non-linear, and this case can be handled by setting in advance a non-linear table indicating the correlation of the both.

(Experimental example 1)

As the illumination, there is an actual use example of a laser light source or the like by means of a high-power 120 mJ double-pulsed Nd:YAG laser, but this time continuous light by a halogen light source and natural light was used, which has a compactness suitable for a field examination. The Makstov-Cassegrain telescope OMC-140 (D = 140 mm, f = 2000 mm, 33% center shield rate) made by Orion Optics was used. The degree of a field curvature, which is one of Seidel's five aberrations, of an image obtained by the CCD camera through the OMC-140 was checked but there was almost none, and hence mapping for correcting the field curvature was not performed when calculating a flow velocity vector.

As the camera, A602f made by Basler Inc. that is a C-MOS sensor camera is used. The size of one pixel is 9.9 $\mu$m, with which photographing of 100 fps is possible. Also, for comparison, A601f (60 fps) made by the same company was used depending on the case.

An image signal obtained from the camera is transferred as digital data as it is via an IEEE 1394 board mounted in a computer, and the data are stored in a memory of the computer once and thereafter stored in a hard disk. Further, depending on the case (particularly when the frame rate is set to low), it is possible to use a shutter function by an external trigger.

Hereinafter, principles that enable measurement even when the size of a tracer particle is equal to or smaller than one of pixels of the CCD camera will be explained.

When a tracer particle of 30 $\mu$m is observed from a place that is 20 m away, the apparent diameter is a quite small angle as $1.5 \times 10^{-6}$ rad (0.309 arcsec). Meanwhile, when a camera with one pixel having a size of 9 $\mu$m pixel is used as the CCD camera for example, and an optical system with a focal distance of 2000 mm is used for direct-focus photographing, the diameter of a tracer in this image becomes 0.947 pixel/arcsec. Accordingly, the size of a tracer is 0.309 x 0.947 = 0.293 pixel. Specifically, it is a size equal to or smaller than one pixel with respect to a pixel of the CCD camera. Therefore, for photographing the shape of a tracer itself, a CCD camera having pixels smaller than 9 $\mu$m, or an optical system having a focal distance that is much longer than 2000 mm is required.

However, using enlargement of an image due to a diffraction limit of an optical system, it is possible to photograph an image to be larger than one of pixels of a CCD, in other words, to photograph characteristics of individual tracers. It is an example of telescopic use application, but is similar for microscopic use application so as to photogram a 1.5 $\mu$m tracer particle at one meter in front.

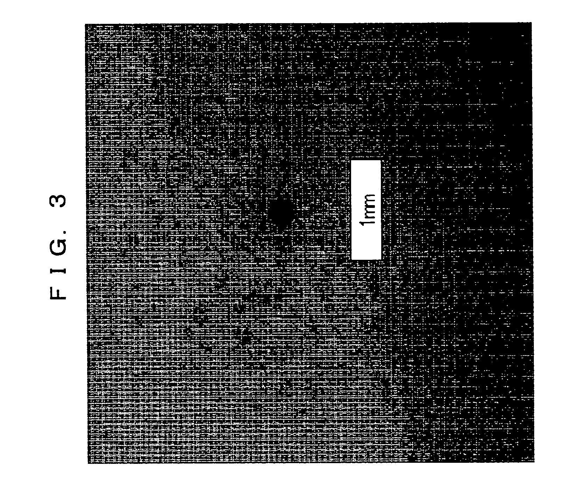

Now, an example of an imitation tracer with 1 mm diameter imaged from a position 15 m away by actually using this system is shown in FIG. 3. The size of this image is approximately 25 pixels. Assuming that the moving distance between two images used for PIV processing is 5 pixels, measurement with about 200 $\mu$m as an actual amount of displacement is possible.

Incidentally, error factors in the case of performing vibration measurement (vibration factors other than the object to be measured) include vibration from a floor surface, fluid-excited vibration of the measurement system itself, and scintillation due to vibration (such as wind) in the atmosphere between the object to be measured and the measurement system.

The vibration from a floor surface can be prevented by using an insulator for the tripod fixing the CCD camera. Further, the fluid-excited vibration of the measurement system itself can be prevented by building a blocking facility so that the wind does not blow directly, by measurement from the inside of a building, or the like.

The scintillation due to vibration in the atmosphere between the object to be measured and the measurement system is intermittent, and the image is not always disturbed continuously for a long time. Therefore, it can be avoided for a certain degree by measuring at appropriately selected timings.

Also, when it is conceivable that there are effects of vibration due to an error factor (external disturbance), it is necessary to photograph other than the position of the object to be measured for comparison and reference. The error factor can be identified when it can be recognized in such a photographed image for comparison and reference, which may allow alleviation of error by processing such as taking a difference.

(Experimental example 2)

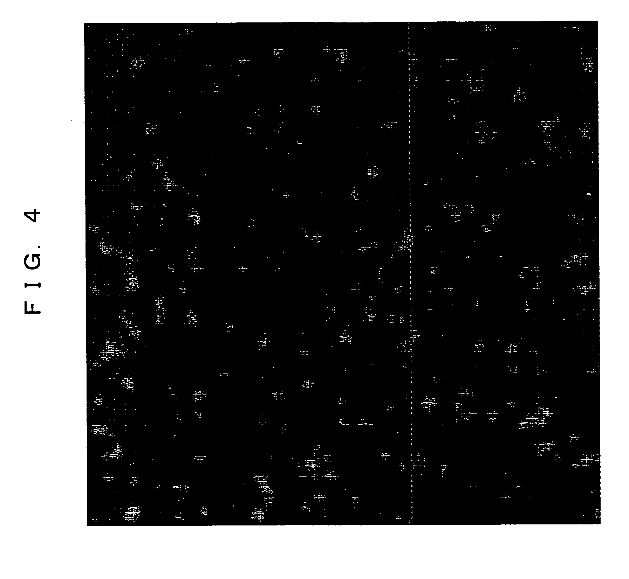

In experimental example 2, measurement of fluid-excited vibration in piping (internal flow) was performed. Regarding the vibration in piping, vibration cycle measurement as shown in FIG. 4 was performed. Instead of the tracer, a VSJ-PIV standard image printed on a paper was attached on the surface of piping, and measurement was carried out from a position that is 15 m away.

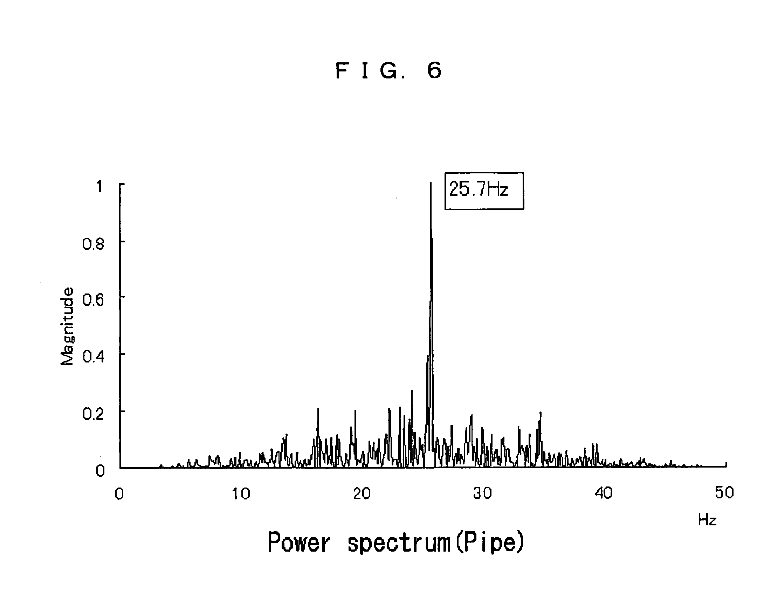

Images for 1027 time instants were photographed at every 1/100 s, and 1026 velocity vectors were obtained. From these velocity vectors, 1024 acceleration vectors were calculated by a central difference of secondary precision, and a power spectrum shown in FIG. 6 was obtained using FFT (Fast Fourier Transform). Consequently, the natural period was 0.039 s, and the vibration frequency was 25.7 Hz. Note that when the vibration frequency calculated here match with a natural vibration frequency that is obtained separately, resonance phenomenon occurs and may result in destruction.

As a phenomenon that often becomes a problem in a power generating plant of nuclear energy or the like, there is vibration of piping such as surging by a pump or air-exhaust ventilator. In a plant, a piping is not always located at a position where an acceleration sensor can be attached easily, and also points to be measured thereof may often be numerous. Therefore, a simple measurement method as this experimental example, not requiring any engineering work or operation at the site such as building scaffolding, is useful.

(Experimental example 3)

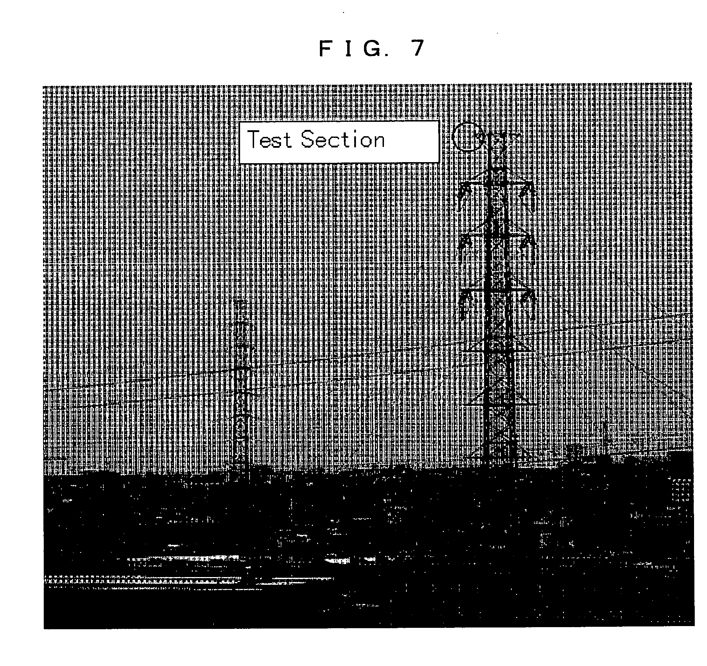

In experimental example 3, fluid-excited vibration in a transmission line tower (external flow) was measured. For a transmission line tower (FIG. 7) that is actually used, fluid-excited vibration by a natural wind was measured from a location that is 240 m away.

For a general building or the like, direct measurement by an acceleration sensor or the like is conceivable, but a transmission line tower is a place to which access is very difficult. To avoid vibration of the measurement system itself by the wind, measurement was performed from the inside of a building.

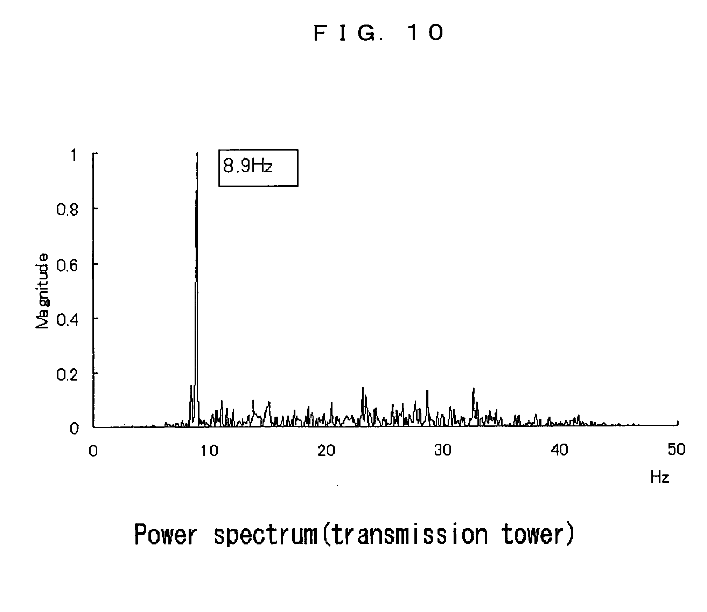

Since it is a high place, it is not easy to attach an imitation tracer on a point to be measured as different from the above-described case of piping, and hence a bolt at a connection part is regarded as a tracer particle and the velocity of a surrounding region thereof was obtained. In this manner, images for 1027 time instants were photographed at every 1/100 s, and 1026 velocity vectors were obtained. From these velocity vectors, 1024 acceleration vectors were calculated by a central difference of secondary precision, and a power spectrum shown in FIG. 10 was obtained using FFT (Fast Fourier Transform).

Consequently, the natural period was 0.11 s, and the vibration frequency was 8.9 Hz. According to a reference (Architectural Institute of Japan, AIJ 1978, Vibration Experiment of Building Structure, Maruzen, pp. 291), the natural period of a 40 m class transmission line tower is 0.2 s from a common formula, and therefore it is recognized to have sufficient stiffness.

In addition, images of pictures of 1027 time instants were photographed at every 1/60 s using the A601f made by Basler as an imaging camera for comparison to obtain a natural period, but this provided similar results.

(Experimental example 4)

In experimental example 4, fluid-excited vibration (external flow) in a transmission line was measured. For a transmission line that is actually used, measurement of a cycle of fluid-excited vibration by a natural wind was measured. To avoid vibration of the measurement system itself by the wind, measurement was performed from the inside of a building. Since it is a high place, it is not easy to attach an imitation tracer on a measuring point as different from the above-described case of piping, and hence a pattern in a spiral shape on the surface of the transmission line is regarded as a characteristic to be traced and the velocity of a surrounding region thereof was obtained.

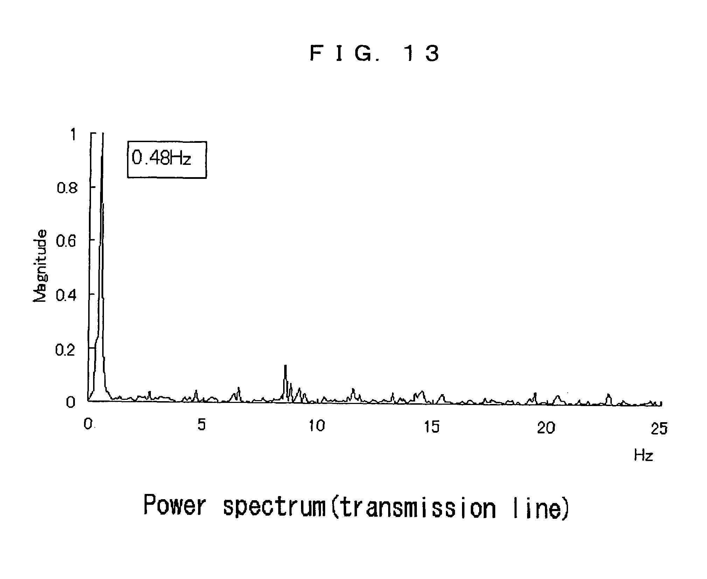

In this manner, images for 1027 time instants were photographed at every 1/100 s, and 1026 velocity vectors were obtained. From these velocity vectors, 1024 acceleration vectors were calculated by a central difference of secondary precision, low-pass filter processing is performed, and thereafter a power spectrum was obtained using FFT (Fast Fourier Transform) (FIG. 13). Consequently, the natural period was 2.1 s, and the vibration frequency was 0.48 Hz.

Note that the low-pass filter processing is means for converting an image into spatial frequency components of luminance, and filtering processing of leaving predetermined or lower frequency components from the converted frequency components. After the filtering processing, means for converting the frequency components into an image is also needed separately.

On the transmission line, there are problems of cutoff accident and the like due to galloping phenomenon by freezing of ice thereon. Tests are conducted with imitation test lines or the like, but it is difficult to cover extensive installation conditions in the country. Direct measurement by an acceleration sensor or the like is conceivable, but it is a place to which access is very difficult. Therefore, this method, which makes it possible to measure vibration at a site to which access is very difficult, is useful.

As has been explained above, as a method capable of measuring a vibration measurement from a far location in a non-contact manner, Super-Long Range PIV is developed, with which it is possible to measure vibration by fluid-related vibration due to internal flow and external flow.

Further, for vibration of piping at a location where a distance between the measurement system and the object to be measured is large (15 m) as an example of fluid-excited vibration due to internal flow, and for vibration of a transmission line tower and a transmission line installed at a far distance (240 m) as an example of fluid-excited vibration due to external flow, it is possible to use the PIV method so as to measure time variations of acceleration and obtain vibration frequencies.

Industrial Availability

The present invention has a possibility to be used in any industry using vibration measurement. Examples thereof include maintenance industry of various equipment, software development industry creating control programs for various equipment, and the like.

**Claims**

**1.** A vibration measurement system provided with an imaging means for imaging an object at a minute time interval, a control means for controlling the imaging means, and an image processing means for comparing luminance pattern distributions at plural time instants obtained by said imaging means so as to measure a moving direction and a moving amount of a predetermined particle image in the object, said imaging means being provided with a long focus optical system, and thereby the vibration measurement system being capable of imaging an object separated by a long distance,

the vibration measurement system comprising a vibration frequency calculation means for inputting numerous measurement results of the moving direction and the moving amount of the predetermined particle image measured by said image processing means and calculating an acceleration vector from the imaging interval and perform Fourier transform thereon so as to calculate the vibration frequency of the object.

**2.** The vibration measurement system according to claim 1, wherein:

said control means has a focal distance adjusting means for calculating a focal distance such that, for photographed images at two time instants obtained by the image processing means, a moving distance of a particle image within the photographed images falls within a predetermined range of set number of moving pixels; and a long focus optical system corresponding to a focal distance obtained by said focal distance adjusting means is selected, and the long focus optical system is attached to the imaging means for performing imaging.

**3.** The vibration measurement system according to claim 2, wherein said focal distance adjusting means is configured to calculate a focal distance f that satisfies the following relational expressions (1), (2):

$$\text{set number of moving pixels} = V \times \Delta t \ / \ D \ ... \ (1),$$

$$D = f/L \times const \ \ldots\ldots\ (2)$$

(where "V" is the temporary velocity of the object, "$\Delta t$" is the imaging time interval between two time instants, "D" is the size of an image projected on each pixel of the imaging means, "f" is the focal distance, "L" is the distance to the object, "const" is a constant obtained from experiments.)

4. A vibration measurement method comprising:

   an imaging step for imaging an object separated by a long distance at a minute time interval by comprising a long focus optical system;
   an image processing step for comparing luminance pattern distributions at plural time instants obtained by the imaging step so as to measure a moving direction and a moving amount of a predetermined particle image in the object;
   a measuring result input step for inputting numerous measurement results of the moving direction and the moving amount of the predetermined particle image measured by the image processing step;
   a vibration frequency calculation step for calculating an acceleration vector from the imaging interval and performing Fourier transform thereon so as to calculate the vibration frequency of the object; and
   a vibration frequency output step for outputting the calculation result obtained by the vibration frequency calculation step.

5. A vibration frequency measurement program for a vibration measurement system provided with an imaging means for imaging an object at a minute time interval, a control means for controlling the imaging means, and an image processing means for comparing luminance pattern distributions at plural time instants obtained by said imaging means so as to measure a moving direction and a moving amount of a predetermined particle image in the object, said imaging means being provided with a long focus optical system, and thereby the vibration measurement system being capable of imaging an object separated by a long distance, the computer program configured to cause a computer controlling said vibration measurement system to realize:

   a measuring result input step for inputting numerous measurement results of the moving direction and the moving amount of the predetermined particle image measured by the image processing step;
   a vibration frequency calculation step for calculating an acceleration vector from the imaging interval and performing Fourier transform thereon so as to calculate the vibration frequency of the object; and
   a vibration frequency output step for outputting the calculation result obtained by the vibration frequency calculation step.

Measured Field

TELESCOPE — CCD CAMERA

COMPUTER

20m～

EP 1 947 430 A1

FIG. 2

CONTROL MEANS

FOCAL DISTANCE
ADJUSTING MEANS — 41a

TIMING CONTROL MEANS — 41b

IMAGE CAPTURE MEANS — 42

IMAGE PROCESSING
MEANS — 43

OUTPUT

EP 1 947 430 A1

F I G. 3

F I G. 4

EP 1 947 430 A1

13

F I G. 5

Time domain (Pipe)

pixel/s$^2$

EP 1 947 430 A1

# F I G. 6

Power spectrum(Pipe)

FIG. 7

F I G. 8

FIG. 9

Power spectrum (transmission tower)

F I G. 1 0

Power spectrum (transmission tower)

FIG. 11

FIG. 12

Time domain(transmission line)

EP 1 947 430 A1

Power spectrum(transmission line)

EP 1 947 430 A1

**INTERNATIONAL SEARCH REPORT**

| International application No. |
|---|
| PCT/JP2006/321369 |

A. CLASSIFICATION OF SUBJECT MATTER
*G01H9/00*(2006.01)i

According to International Patent Classification (IPC) or to both national classification and IPC

B. FIELDS SEARCHED

Minimum documentation searched (classification system followed by classification symbols)
G01H9/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-156389 A (Toshiba Corp. et al.), 30 May, 2003 (30.05.03), Par. Nos. [0058] to [0062] (Family: none) | 1-5 |
| A | JP 7-260562 A (Minolta Co., Ltd. et al.), 13 October, 1995 (13.10.95), (Family: none) | 1-5 |
| A | JP 7-167609 A (The Tokyo Electric Power Co., Inc. et al.), 04 July, 1995 (04.07.95), (Family: none) | 1-5 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 January, 2007 (23.01.07) | 06 February, 2007 (06.02.07) |

| Name and mailing address of the ISA/ Japanese Patent Office | Authorized officer |
|---|---|
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6388428 B
- JP H10232198 B